(19) Europäisches Patentamt
European Patent Office
Office européen des brevets

(11) **EP 3 488 419 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(51) Int Cl.:
*G06T 7/73* (2017.01)  *B62D 1/02* (2006.01)
*B62D 15/02* (2006.01)

(21) Anmeldenummer: **17726257.3**

(86) Internationale Anmeldenummer:
**PCT/EP2017/062461**

(22) Anmeldetag: **23.05.2017**

(87) Internationale Veröffentlichungsnummer:
**WO 2018/015050 (25.01.2018 Gazette 2018/04)**

(54) **FAHRASSISTENZVERFAHREN, FAHRASSISTENZSYSTEM UND FAHRZEUG**

DRIVING ASSISTANCE METHOD, DRIVING ASSISTANCE SYSTEM, AND VEHICLE

PROCÉDÉ D'AIDE À LA CONDUITE, SYSTÈME D'AIDE À LA CONDUITE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2016 DE 102016213495**

(43) Veröffentlichungstag der Anmeldung:
**29.05.2019 Patentblatt 2019/22**

(73) Patentinhaber: **Robert Bosch GmbH**
**70442 Stuttgart (DE)**

(72) Erfinder:
• **ANKA, Laszlo**
**1165 Budapest (HU)**
• **SZABO, Vilmos**
**1137 Budapest (HU)**

(56) Entgegenhaltungen:
DE-A1-102008 002 598   DE-A1-102015 007 678
DE-A1-102015 010 746

**Beschreibung**

Stand der Technik

Die vorliegende Erfindung betrifft ein Fahrassistenzverfahren, ein Fahrassistenzsystem sowie ein Fahrzeug. Die vorliegende Erfindung betrifft insbesondere ein Fahrassistenzverfahren für ein Fahrzeug, ein Fahrassistenzsystem für ein Fahrzeug und insbesondere ein Kraftfahrzeug mit einem Fahrassistenzsystem.

Zur Unterstützung beim Führen eines Fahrzeugs werden vermehrt so genannte Fahrassistenzsysteme eingesetzt. Dies kann zum Beispiel mit der Absicht geschehen, ein autonomes Fahren, zum Beispiel auf einer Autobahn oder dergleichen, zu bewerkstelligen oder den Fahrzeugführer beim Rangieren und insbesondere beim Einparken zu unterstützen.

Herkömmliche Fahrassistenzsysteme verwenden vergleichsweise aufwendige Verfahren, um aus einer Sequenz zweidimensionaler Aufnahmen, die mit einer Fahrzeugkamera erzeugt werden, im Zusammenwirken mit Bewegungsdaten eine dreidimensionale Struktur und aus dieser die Lage und die Orientierung des Fahrzeugs im Raum und in Relation zur Umwelt zu erfassen (Structure-from-Motion-Konzept).

Nachteilig bei diesen herkömmlichen Verfahren ist der vergleichsweise hohe Aufwand der Datenverarbeitung zur Bewertung von Lage und Orientierung des Fahrzeugs im Raum und in Bezug auf die Umgebung. Des Weiteren sind bekannte Verfahren bezüglich ihrer Genauigkeit der Bewertung der Geometrie der Umgebung fehleranfällig.

DE 10 2015 007678 A1 offenbart ein Verfahren zur Selbstlokalisation eines Fahrzeugs. Dabei werden entlang einer ersten Trajektorie mit einer Bilderfassungseinheit vom Boden in der Umgebung des Fahrzeugs Bilder aufgenommen. Aus bestimmten Bildbereichen werden Merkmale extrahiert und zusammen mit einer jeweiligen Ausrichtung des Fahrzeugs und mit zugeordneten Positionen als Vergleichsmerkmale in einer Datenbank gespeichert. Auf einer zweiten Trajektorie werden Korrespondenzen zwischen Merkmalen aus neuaufgenommenen Bildern und den Vergleichsmerkmalen gesucht. Anhand dieses Vergleichs werden die aktuelle Position und die aktuelle Ausrichtung des Fahrzeugs ermittelt. Dadurch wird das Fahrzeug entlang der ersten Trajektorie geführt.

DE 10 2015 010746 A1 beschreibt ein Verfahren zur Selbstlokalisation eines Fahrzeugs und zur Detektion von Objekten in seiner Umgebung. Ähnlich wie beim vorherigen Dokument werden dabei aus zeitlich aufeinanderfolgenden Bildern Bodenmerkmale ermittelt und mit in einer Datenbank gespeicherten Vergleichsmerkmalen verglichen. Die Bodenmerkmale sind mit Hilfe eines optischen Flusses ermittelbar. Zudem werden in den Bildern Kanten detektiert.

Offenbarung der Erfindung

Das erfindungsgemäße Fahrassistenzverfahren mit den Merkmalen des unabhängigen Anspruches 1 weist demgegenüber den Vorteil auf, dass mit vergleichsweise einfachen Mitteln eine besonders zuverlässige Bewertung von Lage und Orientierung eines Fahrzeugs in der Fahrumgebung möglich ist. Dies wird erfindungsgemäß mit den Merkmalen des angefügten unabhängigen Anspruches 1 erreicht. Durch das Erfassen von Kamerabildern der Umgebung des Fahrzeugs an äquidistant beabstandeten Positionen der Sollfahrstrecke, das heißt also entlang der durchmessenen Bogenlänge, und durch das Bestimmen von Linien- oder Kantensegmenten und von Merkmalspunkten mit entsprechenden Deskriptoren wird die zu verarbeitende Datenmenge gegenüber herkömmlichen Vorgehensweisen reduziert, wobei aus den Kantensegmenten, den Merkmalspunkten und den entsprechenden Deskriptoren ein hoher Grad an Zuverlässigkeit bei dem Vergleich zwischen Istparcoursdaten und Sollparcoursdaten erreicht wird.

Die Unteransprüche zeigen bevorzugte Weiterbildungen der Erfindung.

Ein besonders hohes Maß an Übereinstimmung zwischen dem Istparcours gegenüber dem Sollparcours ergibt sich dann, wenn gemäß einer anderen Weiterbildung des erfindungsgemäßen Fahrassistenzverfahrens in der Replayphase eine Punktkorrespondenz ermittelt wird, indem (a) der für eine - insbesondere aktuelle - Istposition ermittelte Deskriptor mit Deskriptoren zu Sollpositionen abgeglichen wird und (b) derjenige Datensatz einer Sollposition als Referenzdatensatz bestimmt wird, bei welchem eine Deskriptorenübereinstimmung mit dem Deskriptor der Istposition maximal ist, insbesondere um dadurch zumindest näherungsweise die aktuelle Position des Fahrzeugs relativ zum Sollparcours zu bestimmen.

Die Auswertung der erfassten Daten zum Istparcours lässt sich besonders kompakt gestalten, wenn gemäß einer anderen Weiterbildung des erfindungsgemäßen Fahrassistenzverfahrens in der Anwendungs- oder Replayphase aus dem Datensatz zu einer - insbesondere aktuellen - Istposition und einem Referenzdatensatz der Sollparcoursdaten ein optischer Fluss $\dot{\vec{r}}$ in Form eines Vektorfeldes ermittelt wird.

Dabei ist es von besonderem Vorteil, wenn der optische Fluss $\dot{\vec{r}}$ als Vektorfeld in geeigneter Weise zerlegt wird. So kann es bei einer anderen Weiterbildung des erfindungsgemäßen Fahrassistenzverfahrens vorgesehen sein, dass der optische Fluss $\dot{\vec{r}}$ in eine translatorische Komponente und eine rotatorische Komponente zerlegt wird, um eine aktuelle Orientierung des Fahrzeugs oder seiner Kamera auf dem Istparcours zu bestimmen.

Bei einer anderen Alternative des erfindungsgemäßen Fahrassistenzverfahrens ist es vorgesehen, dass in der Anwendungs- oder Replayphase eine relative Orientierung ermittelt wird auf der Grundlage der jeweiligen Kantensegmente aus dem Datensatz zur Istposition und dem Referenzdatensatz der Sollparcoursdaten.

Die für das Unterstützen des Führers eines Fahrzeugs notwendige Genauigkeit bei der Bewertung von Position und Lage im Raum lässt sich weiter steigern, wenn gemäß einer anderen vorteilhaften Ausführungsform des erfindungsgemäßen Fahrassistenzverfahrens in der Anwendungs- oder Replayphase eine relative Orientierung ermittelt wird durch (a) Projizieren von Kantensegmenten aus dem Datensatz zur Istposition und dem Referenzdatensatz der Sollparcoursdaten auf eine Einheitssphäre, (b) Bestimmen von Fluchtpunkten und/oder (c) Abgleichen der Fluchtpunkte.

Ferner betrifft die vorliegende Erfindung ein Fahrassistenzsystem gemäß dem angefügten unabhängigen Anspruch 7.

Gemäß einem weiteren Aspekt der vorliegenden Erfindung wird auch ein Fahrzeug und insbesondere ein Kraftfahrzeug, vorzugsweise ein Personenkraftwagen, geschaffen. Das erfindungsgemäße Fahrzeug ist ausgebildet mit einem Antrieb, einer Lenkeinheit, einer Steuereinheit und einem Fahrassistenzsystem gemäß der vorliegenden Erfindung.

Die Steuereinheit ist bei dem erfindungsgemäßen Fahrzeug ausgebildet, den Antrieb und/oder die Lenkeinheit auf der Grundlage vom erfindungsgemäßen Fahrassistenzsystem bereitgestellter Daten zu steuern.

Kurzbeschreibung der Figuren

Unter Bezugnahme auf die beigefügten Figuren werden Ausführungsformen der Erfindung im Detail beschrieben.

Figur 1            ist eine schematische Seitenansicht einer Ausführungsform des erfindungsgemäßen Fahrzeugs.

Figur 2            zeigt in schematischer Draufsicht zur Erläuterung einer Ausführungsform des erfindungsgemäßen Fahrassistenzverfahrens einen Sollparcours im Vergleich zu einem Istparcours.

Figur 3            erläutert Details zu einem Sollparcours.

Figur 4            erläutert in schematischer Form ein Projektionsverfahren auf eine Einheitssphäre.

Figuren 5 bis 8    zeigen in Form von Graphen Aspekte des optischen Flusses im Zusammenhang mit der Bestimmung der Grundlinienausrichtung verwendeter Kameras.

Figur 9            erläutert in schematischer Form ein Triangulationsverfahren.

Figuren 10 und 11  zeigen in Form von Graphen Ergebnisse aus Simulationen und mit realen Daten zu einem Triangulationsverfahren.

Figuren 12 bis 14  zeigen in schematischer Form Kameraansichten im Zusammenhang mit einem Sollparcours bzw. einem Istparcours.

Bevorzugte Ausführungsformen der Erfindung

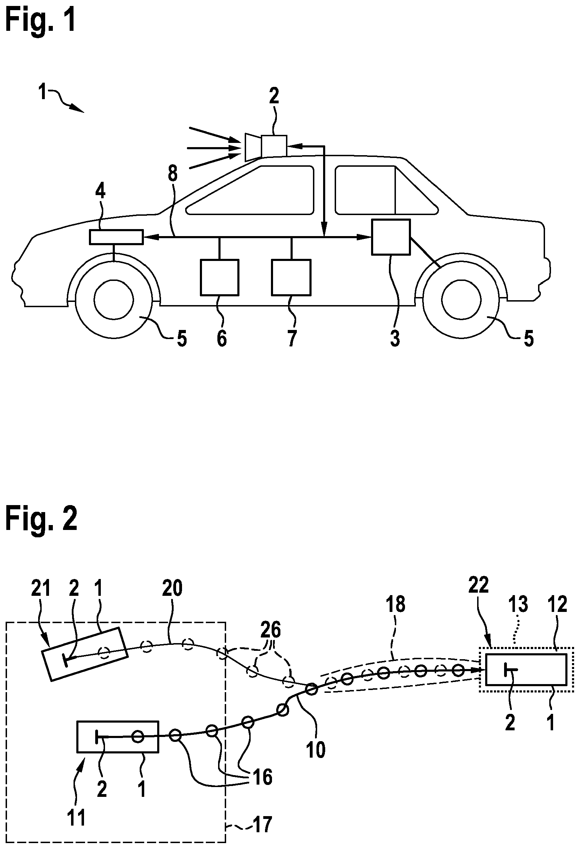

Nachfolgend werden unter Bezugnahme auf die Figuren 1 bis 14 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in schematischer Seitenansicht eine Ausführungsform des erfindungsgemäßen Fahrzeugs 1.

Das erfindungsgemäße Fahrzeug gemäß Figur 1 ist mit einem Antrieb 3 zum Antreiben eines Rades 5 ausgestattet. Es handelt sich hierbei um ein hinteres Rad 5. Des Weiteren ist das erfindungsgemäße Fahrzeug 1 mit einer Lenkeinheit 4 zum Lenken eines vorderen Rades 5 ausgebildet. Die Lenkeinheit 4 weist üblicherweise ein Lenkrad zum Betätigen durch einen Fahrzeugführer auf. Zusätzlich können entsprechende Aktuatoren, zum Beispiel im Sinne einer Servolenkung vorgesehen sein.

Im Zusammenhang mit Aspekten des autonomen Fahrens und/oder Einparkens ist erfindungsgemäß ein Fahrassistenzsystem 7 im Zusammenwirken mit einer Außenkamera 2 und einer allgemeinen Steuereinheit 6 des Fahrzeugs 1 ausgebildet.

Durch die Steuereinheit 6 gesteuert, erfasst die Kamera 2 in Fahrtrichtung des Fahrzeugs 1 die Fahrzeugumgebung und gibt über den gemeinsamen Bus 8 entsprechende Bilddaten aus, die vom Fahrassistenzsystem 7 aufgenommen werden können.

Das Fahrassistenzsystem 7 bewertet die von der Kamera 2 bereitgestellten Bilddaten, insbesondere im Zusammenhang mit einem Vergleich zwischen einem Istparcours 20 und einem Sollparcours 10, wie sie unten im Zusammenhang mit Figur 2 im Detail erläutert werden.

Auf Grund der Bewertung durch das Fahrassistenzsystem 7 ist die Steuereinheit 6 in der Lage, den Antrieb 3 und/oder die Lenkeinheit 4 für einen autonomen Betrieb des Fahrzeugs 1 zu steuern.

Figur 2 erläutert in einer schematischen Draufsicht Aspekte einer Ausführungsform des erfindungsgemäßen Fahrassistenzverfahrens.

Dargestellt ist ein Sollparcours 10, der auch als Trainingsparcours bezeichnet werden kann. Dieser führt von einer Sollstartposition 11 zu einer Sollzielposition 12, die sich in einer gewissen Umgebung 13 befindet. Zwischen der Sollstartposition 11 und der Sollzielposition 12 ist eine Mehrzahl entlang der Bogenlänge des Sollparcours 10 äquidistant beabstandeter Zwischenpositionen vorgesehen, die auch als Sollpositionen 16 bezeichnet werden und an denen die Kamera 2 des Fahrzeugs 1 im Betrieb der Trainingsphase eine entsprechende Aufnahme der Fahrzeugumgebung in Fahrtrichtung erfasst.

In der Anwendungsphase, die auch als Replayphase bezeichnet wird, befindet sich das Fahrzeug 1 im Allgemeinen nicht direkt an der Iststartposition 11, sondern in einer vordefinierten Umgebung 17 dazu. Das bedeutet, dass - wenn sich die Iststartposition 21 des Fahrzeugs 1 innerhalb der Umgebung 17 der Sollstartposition 11 befindet - das erfindungsgemäße Fahrassistenzverfahren gestartet werden kann, um ein autonomes Führen des Fahrzeugs 1 von der Iststartposition 21 zu einer Istzielposition 22 innerhalb des Bereichs 13 oder der Umgebung 13 der Sollzielposition 12 zu bewirken.

Auf dem Weg von der Iststartposition 21 in den Bereich 13 oder der Umgebung 13 der Sollzielposition 12 fährt das Fahrzeug 1 entlang des Istparcours 20, wobei an Zwischenpositionen, die als Istpositionen 26 bezeichnet werden, von der Kamera 2 entsprechende Bilddaten im Sinne von Keyframes erfasst und vom Fahrassistenzsystem 7 ausgewertet werden. Während der Fahrt werden also in der erfindungsgemäßen Art und Weise die an den Istpositionen 26 erfassten Daten mit den an den Sollpositionen 16 in der Trainingsphase erfassten Daten abgeglichen, um eine Steuerung des Fahrzeugs 1 zur Sollzielposition 12 hin oder zumindest in den Bereich oder der Umgebung 13 der Sollzielposition 12 hin zu bewirken.

Bei dieser Steuerung ist ein durch den Schlauch 18 definierter maximaler Fehler zwischen dem Istparcours 20 und dem Sollparcours 10 erlaubt. Dieser maximale Fehler 18 kann in Abhängigkeit vom Abstand von der Sollzielposition 12 oder von der zu erreichenden Umgebung 13 der Sollzielposition 12 variabel gestaltet werden.

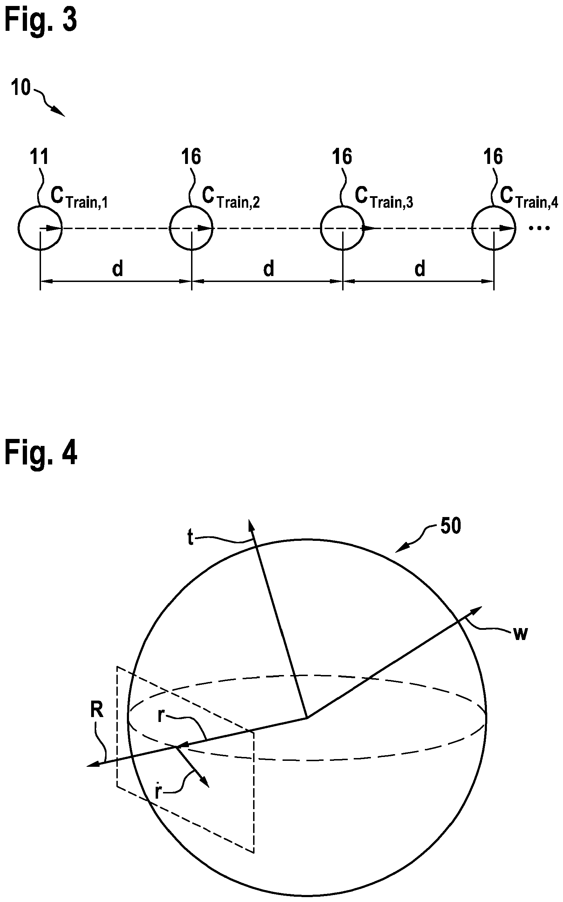

Figur 3 zeigt in schematischer Ansicht einen Ausschnitt aus einem Sollparcours 10 mit einer Sollistposition 11 und zueinander um einen identischen Abstand d beabstandeten Sollpositionen 16. An sämtlichen diskreten Positionen 11 und 16 des Sollparcours 10 werden mittels der Kamera 2 des Fahrzeugs 1 Bilddaten erfasst. Erfindungsgemäß werden bei den erfassten Bilddaten Kantenelemente, Merkmalspunkte und entsprechende Deskriptoren ermittelt.

Dazu ist die Kamera 2 mit ihrer Orientierung vorzugsweise in Richtung der Fahrzeugorientierung ausgerichtet.

Figur 4 zeigt in schematischer Form die bei dem erfindungsgemäß durchgeführten Verfahren zur Fahrassistenz bei bestimmten Ausführungsformen notwendige Projektion auf die Einheitssphäre 50 zur Ermittlung des optischen Flusses $\dot{\vec{r}}$ und zur Bestimmung der Fluchtpunkte sowie der Kameraverbindungslinien 40 (camera base line) oder Kamerabasislinie 40 zwischen Istpositionen 26 und Sollpositionen 16 und deren Orientierung.

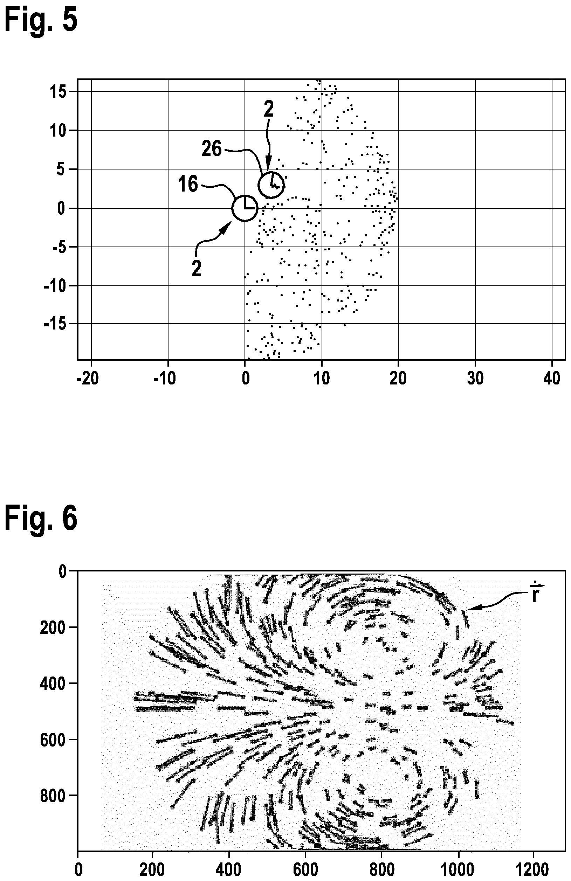

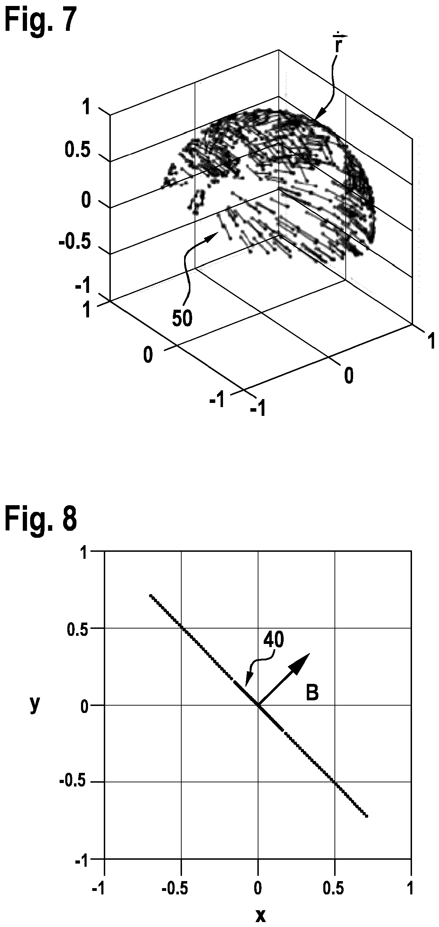

Die Figuren 5 bis 8 zeigen in Form von Graphen Aspekte von Simulationen zum optischen Fluss $\dot{\vec{r}}$, und zwar für zwei Kamerapositionen 16 und 26 gemäß Figur 5, dem daraus ermittelten optischen Fluss $\dot{\vec{r}}$ gemäß Figur 6, dem um eine Rotation der Kamerapositionen 16 und 26 bereinigten optischen Fluss $\dot{\vec{r}}$ auf der Einheitssphäre 50 gemäß Figur 4 in Figur 7 sowie die aus dem optischen Fluss $\dot{\vec{r}}$ auf der Einheitssphäre 50 gemäß Figur 7 ermittelte Orientierung B der Verbindungslinie zwischen den Kamerapositionen 16 und 26 in Figur 8.

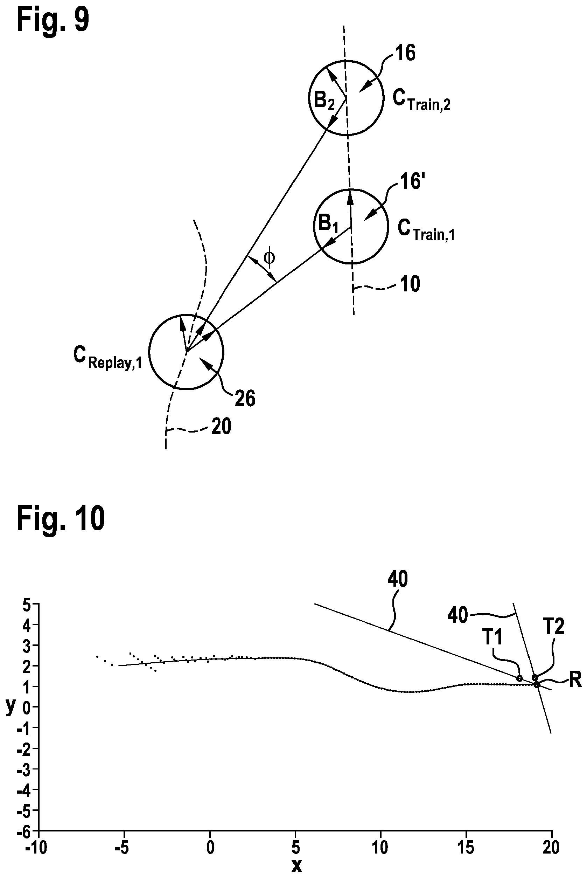

Figur 9 zeigt in schematischer Draufsicht den Sollparcours 20 im Vergleich zu einem Istparcours 10 und Aspekte einer Triangulation einer Istposition 26 mit einer Kameraorientierung im Vergleich zu Sollpositionen 16 und 16' mit entsprechenden Kameraorientierungen.

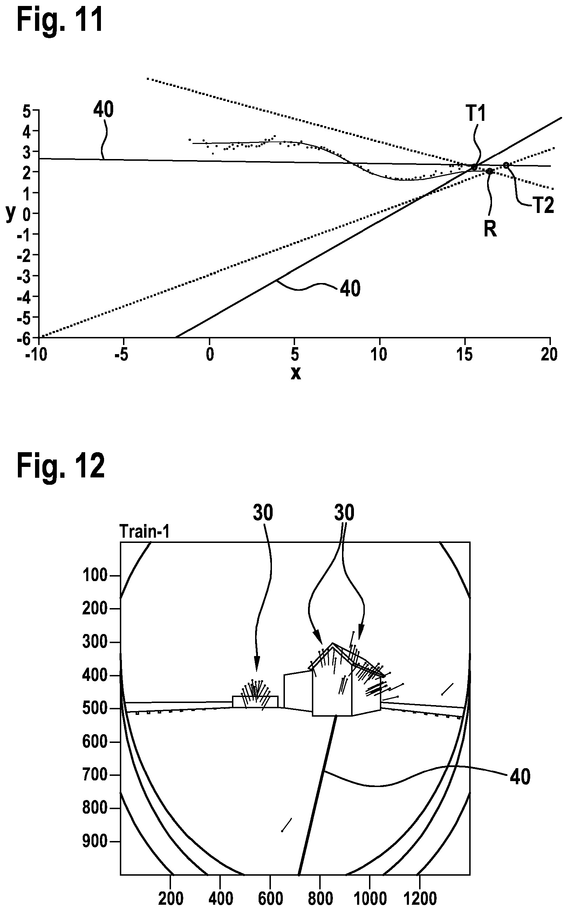

Die Graphen der Figuren 10 und 11 beschreiben Aspekte der Positionstriangulation auf der Grundlage einer Simulation bzw. auf der Grundlage von realen Daten.

Die Figuren 12 bis 14 zeigen in schematischer Form zweidimensionale Kameraansichten mit entsprechend abgeglichenen Bildmerkmalen 30, die über Merkmalspunkte und entsprechende Deskriptoren ermittelt wurden.

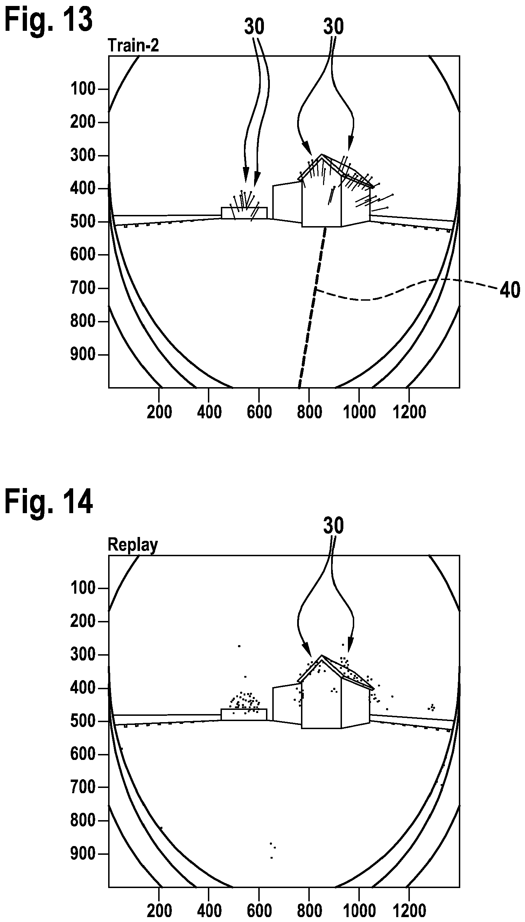

Des Weiteren sind in den Figuren 12 und 13 die Kameraverbindungslinien 40 zwischen der Istposition 26 des Istparcours 20 und zweier Sollpositionen 16 und 16' des Sollparcours 10 dargestellt.

Diese und weitere Merkmale und Eigenschaften der vorliegenden Erfindung werden an Hand der folgenden Darlegungen weiter erläutert:

Für die so genannte Home-Zone-Funktion werden üblicherweise bei Fahrassistenzsystemen 7 Stereo-Videokamerasysteme verwendet.

Die vorliegende Erfindung betrifft ein Fahrassistenzverfahren und ein entsprechendes Messverfahren zum Bestimmen der relativen Position und/oder Orientierung oder Rotation unter Verwendung eines Nahfeldkamerasystems (NRC : near range camera system).

Die Home-Zone-Funktion ist eine Fahrassistenzkomponente im Zusammenhang mit dem autonomen Fahren. Das Verfahren besteht aus zwei Phasen, einer Lern- oder Trainingsphase und einer Anwendungs- oder Replayphase.

In der Trainingsphase werden Aspekte des Pfades und visuelle Eindrücke der Umgebung erfasst und gespeichert, während der Fahrer das Fahrzeug 1 führt, und zum Beispiel an seine Parkposition 12 fährt.

Bei der Replayphase ist das Fahrzeug 1 dann in der Lage, in einem ähnlichen Zustand autonom die Parkposition 12 oder dessen nähere Umgebung 13 anzufahren.

Der Trainingsvorgang beginnt üblicherweise an seiner initialen Position, die auch als Sollstartposition 11 bezeichnet wird.

Im Zusammenhang mit Figur 2 wird dabei die Grenze oder der Rand des Aktivierungsbereichs 17 für die Replayphase definiert. Dann wird das Fahrzeug 1 zur Zielparkposition, die auch als Sollzielposition 12 bezeichnet wird, unter Führung durch den Fahrer gefahren, und zwar entlang des Trainingspfads 10.

Die Replayphase beginnt dann an der Replaystartposition, die auch als Iststartposition 21 bezeichnet wird und innerhalb des Aktivierungsbereichs 17 liegt. Das erfindungsgemäße Fahrzeug 1 fährt in autonomer Art und Weise auf dem Replaypfad, der auch als Istparcours 20 bezeichnet wird. Das Fahrzeug 1 nähert sich dabei dem Trainingspfad oder Sollparcours 10 innerhalb des Schlauches 18 der maximal zulässigen Abweichung vom Sollparcours 10 beim Annähern an die Sollzielposition 12 an.

Die Umgebung 13 der Sollzielposition 12 beschreibt den maximalen Fehler oder die maximale Abweichung, die das Fahrzeug 1 von der Sollzielposition 12 beim Erreichen der Istzielposition 22 haben darf, wenn es mit dem erfindungsgemäßen Fahrassistenzsystem 7 autonom gesteuert wird.

Ein durch die vorliegende Erfindung gelöstes Problem besteht darin, die relative Position und Orientierung zwischen einem Trainingsdatensatz und einem Anwendungs- oder Replaydatensatz zu bestimmen. Eine herkömmliche Möglichkeit zur Lösung dieses Problems bietet das sogenannte SFM-Verfahren (SFM : structure-from-motion), indem eine 3D-Punktwolke entlang des Trainingspfades 10 generiert wird und ein Merkmalsdeskriptor im Zusammenhang mit jedem Punkt zu erzeugt und gesichert wird. Während der Replayphase werden Bildpunkte und deren Deskriptoren extrahiert. Es findet ein Merkmalsabgleich statt, der zu 3D-2D-Merkmalsübereinstimmungen führt. Das Lösen des so genannten P3P-Problems (P3P : perspective three point) liefert die relative Position und Rotation zwischen einer Trainingsposition der Kamera und einer Anwendungs- oder Replayposition der Kamera.

Es sind dazu minimal vier 3D-2D-Korrespondenzen oder -Übereinstimmungen erforderlich. Zu deren Bestimmung werden RANSAC-Algorithmen verwendet, um Ausreißer herauszufiltern und eine optimale Positions-/Orientierungsparameter zu erzeugen.

Dieses herkömmliche Vorgehen ist vergleichsweise aufwendig, was den Speicher- und Verarbeitungsbedarf anbelangt.

Ferner treten Ungenauigkeiten auf, da es zur Überlagerung von Drift- und Verschiebungseffekten kommt.

Erfindungsgemäß werden unter anderem die folgenden zwei Hauptaspekte verbessert:

- Eine Triangulation von 3D-Punkten erfordert die Bestimmung von Schnittpunkten von windschiefen Geraden oder Fluchtlinien. Entfernte Punkte werden mittels spitzer Winkel trianguliert, falls die Kameragrundlinie eine geringe Ausdehnung besitzt. Diese beiden Faktoren führen zu Ungenauigkeiten im Hinblick auf die 3D-Punktwolke.

- Das Erzeugen der rekonstruierten Umgebung entlang des Trainingspfades oder des Istparcours 10 erfordert die Aufnahme oder Integration der Fahrzeugodometrie oder Weglängenmessung. Dies führt zur Aufnahme von Driftfehlern, die sich mit der Zeit aufschaukeln. Eine Möglichkeit, den Einfluss von Drifteffekten zu reduzieren besteht im Durchführen einer Mehrzahl von Trainingsphasen unter Verwendung einer so genannten Bündelanpassung (bundle adjustment), um den Trainingspfad oder den Sollparcours 10 zu korrigieren. Das Vorgehen soll erfindungsgemäß dadurch vereinfacht werden, dass eine einzelne Trainingsphase ausreicht.

Das vorgeschlagene Verfahren vermeidet beide Fehlerquellen.

Zusätzliche Vorteile entstehen durch das Entkoppeln der Rotation und der Translation der bei der Berechnung eingeführter Vektorfelder.

(1) Dies bedeutet insbesondere, dass die Bestimmung der Rotation unabhängig von einer Bildtiefe ausgeführt werden kann.

(2) Die Translationsbestimmung reduziert das Problem beim Bestimmen des Richtungswinkels und kann in effizienter Art und Weise implementiert werden.

(3) Die Ermittlung der anfänglichen Position und/oder Orientierung ist ohne Bewegung möglich, wogegen herkömmlicherweise das SFM-Verfahren eine Bewegung während des Bestimmens erforderlich macht.

Zusätzlich besteht die Möglichkeit, trifokale Tensoren (trifocal tensors) für die erfindungsgemäße Zielsetzung zu verwenden.

Das vorgeschlagene Verfahren kann zum Beispiel im Zusammenhang mit Fischaugenkameras mit einem effektiven Gesichtsfelds von 185 Grad verwendet werden.

Dies ist jedoch nicht obligatorisch, es sind andere Kameramodelle denkbar.

Das hier vorgeschlagene Vorgehen und die damit im Zusammenhang stehenden Algorithmen sind im Zusammenhang mit drei Freiheitsgraden denkbar, nämlich $t_x$, $t_y$, $R_{yaw}$.

Verallgemeinerungen mit bis zu fünf Freiheitsgraden sind möglich.

Trainingsphase

Das erfindungsgemäße Vorgehen beginnt mit dem Aufzeichnen von Trainingsdaten, also insbesondere entlang des in Figur 2 dargestellten Sollparcours 10.

Der Trainingspfad 10 wird in äquidistant beabstandete Bereiche mit entsprechenden Messpositionen 16 mit entsprechenden Datensätzen unterteilt, wie dies im Zusammenhang mit Figur 3 dargestellt ist. Während des Trainings werden an den verschiedenen Punkten 11 und 16 entlang des Sollparcours 10 äquidistant um den Abstand d beabstandet die folgenden Daten erhoben und gespeichert:

- $C^{Train,p}$ beschreibt die Kameraposition $t_{3x1}$, $R_{3x3}$ - jeweils mit Translation t und Rotation T - des Trainingsdatensatzes mit einem entsprechenden am jeweiligen Punkt 11, 16 aufgenommenen Bild.

- Es werden im Zusammenhang mit dem am jeweiligen Punkt 11, 16 aufgenommenen Bild Kantensegmente oder Liniensegmente (edge segment) unter Verwendung eines Kantendetektors oder Eckendetektors ermittelt.

- Ebenfalls werden aus dem jeweils aufgenommenen Bild so genannte Merkmalspunkte (feature points) mit entsprechenden Deskriptoren (descriptor) ermittelt.

Anwendungs- oder Replayphase

Das erfindungsgemäße Vorgehen im Zusammenhang mit der Replayphase oder Anwendungsphase beginnt mit dem Auswählen einer Sollposition 16 als Trainingspunkt und einer Istposition 26 als Replaypunkt.

Eine Punktkorrespondenz (point correspondence) zwischen dem Trainingsdatensatz und dem Anwendungsdatensatz oder Replaydatensatz wird ermittelt, und zwar durch einen Abgleich der jeweiligen mit den Bildern im Zusammenhang stehenden Deskriptoren (descriptor matching). Auf Grund dieses Vorgehens wird ein so genannter optischer Fluss oder ein optisches Flussfeld $\dot{\vec{r}}$ als Vektorfeld zwischen den beiden Datensätzen generiert. Diese hat die folgende allgemeine Form einer optischen Flussgleichung:

$$\dot{\vec{r}} = \vec{v}_{tr}(\vec{r}) + \vec{v}_{rot}(\vec{r}) = \frac{1}{|\vec{R}(\vec{r})|} \cdot \left( (\vec{t} \cdot \vec{r}) \cdot \vec{r} - \vec{t} \right) - \vec{w} \times \vec{r} .$$

Dabei haben die einzelnen Größen folgende Bedeutung:

- R ist ein Weltpunkt mit kartesischen Koordinaten x, y, z.
- r = R/|R(r)| ist der Sichtstrahl (sight ray) oder Richtungsvektor zum Punkt R.
- w = ($\alpha$, $\beta$, $\gamma$) ist der Rotationsvektor.

Dieses Vektorfeld $\dot{r}$ wird in einen Rotationsanteil $v_{rot}$ und einen Translationsanteil $v_{tr}$ zerlegt, und zwar unter Zuhilfenahme der optischen Flussgleichung. Der Rotationsanteil $v_{rot}$ und der Translationsanteil $v_{tr}$ sind Vektorfelder, die sich im Zusammenhang mit Flussgleichung unter Zuhilfenahme der Darstellung der Figur 4 an der Einheitssphäre 50 ergeben.

Relative Rotation

Die relative Rotation oder Orientierung zwischen einem Trainingsdatensatz und einem Anwendungsdatensatz wird unter Verwendung der im Zusammenhang mit den jeweiligen aufgenommenen Bildern erzeugten Liniensegmente abgeleitet. Die Liniensegmente werden auf die Sphäre 50 projiziert, die insbesondere eine Einheitssphäre gemäß Figur 4 ist. Die Fluchtlinienpunkte oder Fluchtpunkte werden bestimmt. Ein Abgleich der Fluchtpunkte ergibt die relative Orientierung zwischen den Kameras in Zusammenhang mit den Trainingsdatensätzen (also an einer Sollposition 16) und den Replay- oder Anwendungsdatensätzen (also an einer Istposition 26).

Kameragrundlinienrichtung (Camera base line direction)

Aus dem bisherigen Vorgehen sind die relativen Rotationen oder Orientierungen der Kameras in der jeweiligen Sollposition 16 bzw. der jeweiligen Istposition 26 und den damit im Zusammenhang stehenden Trainings- und Anwendungsdatensätzen bekannt.

Die Punktkorrespondenzen (point correspondence) aus dem Merkmalsabgleich (feature matching) werden auf die Einheitssphäre projiziert. Die Replaypunkte oder Anwendungspunkte 26 werden auf der Sphäre derotiert, das heißt die Rotation wird aufgehoben, kompensiert oder rückgängig gemacht, und zwar auf der Grundlage der bekannten relativen Rotation oder Orientierung. Das sich ergebende Vektorfeld ist dann ein rein translatorischen Vektorfeld. Die Kameragrundlinienrichtung (camera baseline direction) kann von einer 2-Punktekorrespondenz abgeleitet werden, insbesondere unter Zuhilfenahme der folgenden Zusammenhänge

$$\dot{r_1} = v_{tr}(r_1) + v_{rot}(r_1)$$

$$\dot{r_2} = v_{tr}(r_2) + v_{rot}(r_2)$$

$$\dot{r_1} - v_{rot}(r_1) = v_{tr}(r_1) = \frac{1}{|R(r_1)|}\left((t \cdot r_1)r_1 - t\right)$$

$$\dot{r_2} - v_{rot}(r_2) = v_{tr}(r_2) = \frac{1}{|R(r_2)|}\left((t \cdot r_2)r_2 - t\right)$$

Dabei bezeichnen $n_1$ und $n_2$ Normalvektoren auf der Ebene, die definiert ist durch den Ursprung der Sphäre 50 und den rein translatorischen Anteil des optischen Flussvektors $\dot{r}$ auf der Oberfläche der Sphäre 50.

Es gilt:

$$n_1 = r_1 \times v_{tr}(r_1)$$

$$n_2 = r_2 \times v_{tr}(r_2)$$

$$B = n_1 \times n_2$$

B ist die Kameragrundlinienrichtung zwischen den beiden Kamerapunkten also insbesondere der Position der Kamera 2 an der Trainingsposition, also einer Sollposition 16, und der Position der Kamera 2 an der Replayposition, also einer Istposition 26.

Dies ist im Zusammenhang mit der Abfolge der Figuren 5 bis 8 näher erläutert. Dort ist die Simulation des optischen Flusses als Vektorfeld dargestellt.

Figur 5 zeigt dabei die beiden betrachteten Kameras 2 mit Translation und Rotation, also eine Kamera 2 an einer Trainings- oder Sollposition 16 und eine Kamera an einer Replayposition oder Istposition 26.

Figur 6 zeigt den in Bezug auf die beiden Kameras erzeugten optischen Fluss $\dot{\vec{r}}$ als Vektorfeld.

Figur 7 beschreibt den von der Rotation entkoppelten oder derotierten optischen Fluss $\dot{\vec{r}}$, und zwar projiziert auf eine Einheitssphäre 50.

Figur 8 zeigt die ermittelte Kameragrundlinienrichtung oder -orientierung B, wie sie aus dem optischen Fluss $\dot{\vec{r}}$ abgeleitet werden kann.

Relativposition

Unter der Annahme, dass zwei Kameragrundlinienrichtungen $B_1$ und $B_2$ vorliegen, nämlich zwischen der Kamera 2 an einer Istposition 26 und einer Kamera an zwei Sollpositionen 16 und 16', zum Beispiel gemäß Figur 9, kann die relative Position der Kamera 2 an der Replayposition 26 trianguliert werden, weil die relative Position, Ausrichtung und/oder Orientierung zwischen den jeweils betrachteten Positionen 16, 16' und 26 der Kamera 2 bekannt ist.

Es ergeben sich relative Kamerapositionen und/oder Orientierung in Weltkoordinaten ohne Drift gemäß den nachfolgenden Gleichungen:

$$C_{Train,p} = \begin{bmatrix} R_{Train,p} & t_{Train,p} \\ 0^T & 1 \end{bmatrix} = \begin{bmatrix} I_{3\times3} & 0 \\ 0^T & 1 \end{bmatrix}$$

$$C_{Train,p+1} = \begin{bmatrix} R_{Train,p}^{Train,p+1} & t_{Train,p}^{Train,p+1} \\ 0^T & 1 \end{bmatrix}$$

$$C_{Replay,q} = \begin{cases} \begin{bmatrix} R_{Train,p}^{Replay,q} & t_{Train,p}^{Replay,q} \\ 0^T & 1 \end{bmatrix} \\ \begin{bmatrix} R_{Train,q+1}^{Replay,q} & t_{Train,p+1}^{Replay,q} \\ 0^T & 1 \end{bmatrix} \end{cases}$$

Es gelten noch die Zusammenhänge: $t_{Train,p}^{Replay,q}$ is position of the camera from the origin.

$$t_{Train,p}^{Replay,q} = \lambda_1 \cdot B_1 + t_{Train,p} = \lambda_2 \cdot B_2 + t_{Train,p}^{Train,p+1}$$

$$\lambda_1 \cdot B_1 - \lambda_2 \cdot B_2 = t_{Train,p}^{Train,p+1} - t_{Train,p} = t^{Train,p+1}$$

$$[B_1 \quad -B_2] \begin{bmatrix} \lambda_1 \\ \lambda_2 \end{bmatrix} = t^{Train,p+1} \rightarrow solve\ for\ \lambda_1$$

$$t_{Train,p}^{Replay,q} = \lambda_1 \cdot B_1$$

Im Zusammenhang mit dem erfindungsgemäßen Vorgehen sind in Figur 4 simulierte Daten verwendet worden, wogegen in Figur 5 tatsächliche Anwendungsdaten zu Grunde gelegt wurden.

Die Figuren 10 und 11 zeigen jeweils die Positionstriangulation der jeweils zu Grunde gelegten Daten, also in Figur 10 einerseits eine Simulation und in Figur 11 an Realdaten, wobei das erfindungsgemäße Verfahren zu Grunde gelegt wurde.

## Patentansprüche

1. Fahrassistenzverfahren für ein Fahrzeug (1), bei welchem

    (A) in einer Trainingsphase das Fahrzeug (1) von einem Fahrer durch einen Sollparcours (10) zu einer Sollzielposition (12) gesteuert wird und dabei Sollparcoursdaten erfasst werden,
    (B) in einer Replayphase das Fahrzeug (1) automatisch durch einen Istparcours (20) gesteuert wird, dabei Istparcoursdaten erfasst werden und über einen Vergleich von Istparcoursdaten mit Sollparcoursdaten das Steuern des Fahrzeugs (1) derart durchgeführt wird, dass der Istparcours (20) dem Sollparcours (10) angepasst ist oder wird und in einem Bereich (13) der Sollzielposition (12) endet, und
    (C) als Sollparcoursdaten an - an einer Sollfahrstrecke (15) des Sollparcours (10) äquidistant beabstandeten - Sollpositionen (16) mit einer Kamera (2) Bilder der Umgebung des Fahrzeugs (1) erfasst und aus einer Bildverarbeitung für jedes Bild Kantensegmente, Merkmalspunkte und entsprechende Deskriptoren bestimmt werden,

    **dadurch gekennzeichnet, dass** als Istparcoursdaten an - an einer Fahrstrecke (25) des Istparcours (20) äquidistant beabstandeten - Istpositionen (26) mit einer Kamera Bilder der Umgebung des Fahrzeugs (1) erfasst und aus einer Bildverarbeitung für jedes Bild Kantensegmente, Merkmalspunkte und entsprechende Deskriptoren bestimmt werden, und dass in der Replayphase bei bekannter oder bestimmter relativer Orientierung die relative Lage und Orientierung in der aktuellen Istposition (26) in Bezug auf den Sollparcours (10) ermittelt wird durch Triangulation der Istposition (26) mit zwei - insbesondere nächsten - Positionen (16) auf dem Sollparcours (10), insbesondere unter Verwendung einer Orientierung an der Istposition (26) zu den beiden Positionen (16) auf dem Sollparcours (10).

2. Fahrassistenzverfahren nach Anspruch 1,
    bei welchem in der Replayphase eine Punktkorrespondenz ermittelt wird, indem

    (a) der für eine - insbesondere aktuelle - Istpostion (26) ermittelte Deskriptor mit Deskriptoren zu Sollpositionen (16) abgeglichen wird und
    (b) derjenige Datensatz einer Sollposition (16) als Referenzdatensatz bestimmt wird, bei welchem eine Deskriptorenübereinstimmung mit dem Deskriptor der Istposition (26) maximal ist, insbesondere um dadurch zumindest näherungsweise die aktuelle Position des Fahrzeugs (1) relativ zum Sollparcours (10) zu bestimmen.

3. Fahrassistenzverfahren nach Anspruch 2,
    bei welchem in der Replayphase aus dem Datensatz zu einer - insbesondere aktuellen - Istposition (26) und einem Referenzdatensatz der Sollparcoursdaten ein optischer Fluss $(\dot{\vec{r}})$ in Form eines Vektorfeldes ermittelt wird.

4. Fahrassistenzverfahren nach Anspruch 3,
    bei welchem der optische Fluss $(\dot{\vec{r}})$ in eine translatorische Komponente und eine rotatorische Komponente zerlegt wird, um eine aktuelle Orientierung des Fahrzeugs (1) oder seiner Kamera (2) auf dem Istparcours (20) zu bestimmen.

5. Fahrassistenzverfahren nach einem der vorangehenden Ansprüche, bei welchem in der Replayphase eine relative Orientierung ermittelt wird auf der Grundlage der jeweiligen Kantensegmente aus dem Datensatz zur Istposition (26) und dem Referenzdatensatz der Sollparcoursdaten.

6. Fahrassistenzverfahren nach einem der vorangehenden Ansprüche, bei welchem in der Replayphase eine relative Orientierung ermittelt wird durch

(a) Projizieren von Kantensegmenten aus dem Datensatz zur Istposition (26) und dem Referenzdatensatz der Sollparcoursdaten auf eine Einheitssphäre,
(b) Bestimmen von Fluchtpunkten und
(c) Abgleichen der Fluchtpunkte.

7. Fahrassistenzsystem (7) für ein Fahrzeug (1), umfassend Mittel zur Ausführung des Fahrassistenzverfahrens nach einem der Ansprüche 1 bis 6.

8. Fahrzeug (1),

- mit einem Antrieb (3), einer Lenkeinheit (4), einer Steuereinheit (6) und einem Fahrassistenzsystem (7) nach Anspruch 7,
- wobei die Steuereinheit (6) ausgebildet ist, den Antrieb (3) und/oder die Lenkeinheit (4) auf der Grundlage vom Fahrassistenzsystem (7) bereitgestellter Daten zu steuern.


**Claims**

1. Driving assistance method for a vehicle (1), in which

(A) in a training phase, the vehicle (1) is steered by a driver through a setpoint course (10) to a setpoint target position (12), and in the process setpoint course data are collected,
(B) in a replay phase, the vehicle (1) is steered automatically through an actual course (20), in the process actual course data are collected, and the vehicle (1) is steered by means of a comparison of actual course data with setpoint course data in such a way that the actual course (20) is adapted to the setpoint course (10) and ends in the region (13) of the setpoint target position (12),
and
(C) images of the surroundings of the vehicle (1) are captured with a camera (2) as setpoint course data at setpoint positions (16) which are spaced apart equidistantly on a setpoint section of a route (15) of the setpoint course (10), and edge segments, feature points and corresponding descriptors are determined from image processing for each image,

**characterized in that** images of the surroundings of the vehicle (1) are captured with a camera (2) as actual course data at actual positions (26) which are spaced apart equidistantly on an actual section of a route (25) of the actual course (20), and edge segments, feature points and corresponding descriptors are determined from image processing for each image, and **in that** in the replay phase, given a known or specific relative orientation, the relative position and orientation at the current actual position (26) is determined with respect to the setpoint course (10), by a triangulation of the actual position (26) with two, in particular subsequent, positions (16) on the setpoint course (10), in particular using an orientation at the actual position (26) with respect to the two positions (16) on the setpoint course (10) .

2. Driving assistance method according to Claim 1,
in which, in the replay phase, a point correspondence is determined
in that

(a) the descriptor which is determined for a, in particular current, actual position (26) is compared with descriptors for setpoint positions (16),
and
(b) that data set of a setpoint position (16) at which the correspondence between descriptors with the descriptor of the actual position (26) is at maximum is determined as the reference data set,

in particular in order as a result to at least approximately determine the current position (10) of the vehicle (1) relative to the setpoint course (10).

3. Driving assistance method according to Claim 2,

in which, in the replay phase, an optical flux $\left(\dot{\vec{r}}\right)$ in the form of a vector field is acquired from the data set relating to a, in particular current, actual position (26) and a reference data set of the setpoint course data.

4.  Driving assistance method according to Claim 3,

    in which the optical flux $\left(\dot{\vec{r}}\right)$ is decomposed into a translatory component and a rotational component, in order to determine a current orientation of the vehicle (1) or of its camera (2) on the actual course (20).

5.  Driving assistance method according to one of the preceding claims,
    in which, in the replay phase, a relative orientation is obtained from the data set relating to the actual position (26) and the reference data set of the setpoint course data, on the basis of the respective edge segments.

6.  Driving assistance method according to one of the preceding claims,
    in which, in the replay phase, a relative orientation is obtained via

    (a) projecting edge segments from the data set relating to the actual position (26) and the reference data set of the setpoint course data onto a unit sphere,
    (b) determining vanishing points, and(c) comparing the vanishing points.

7.  Driving assistance system (7) for a vehicle (1), comprising means for carrying out the driving assistance method according to one of Claims 1 to 6.

8.  Vehicle (1),

    - having a drive (3), a steering unit (4), a control unit (6) and a driving assistance system (7) according to Claim 7,
    - wherein the control unit (6) is designed to control the drive (3) and/or the steering unit (4) on the basis of data provided by the driving assistance system (7).

## Revendications

1.  Procédé d'aide à la conduite pour un véhicule (1), dans lequel

    (A) dans une phase d'entraînement, le véhicule (1) est piloté par un conducteur sur un parcours théorique (10) jusqu'à une position de destination théorique (12), et des données de parcours théorique sont détectées à cette occasion,
    (B) dans une phase de reproduction, le véhicule (1) est piloté automatiquement sur un parcours réel (20), des données de parcours réel étant détectées à cette occasion, et par l'intermédiaire d'une comparaison des données de parcours réel avec des données de parcours théorique, le pilotage du véhicule (1) est effectué de telle sorte que le parcours réel (20) est ou sera adapté au parcours théorique (10) et se termine dans une zone (13) de la position de destination théorique (12), et
    (C) en tant que données de parcours théorique, au niveau de positions théoriques (16), espacées de manière équidistante sur un trajet théorique (15) du parcours théorique (10), une caméra (2) enregistre des images de l'environnement du véhicule (1), et des segments de bord, des points caractéristiques et des descripteurs correspondants sont déterminés pour chaque image à partir d'un traitement d'image,

    **caractérisé en ce qu'**en tant que données de parcours réel, au niveau de positions réelles (26) espacées de manière équidistante sur un trajet (25) du parcours réel (20), une caméra enregistre des images de l'environnement du véhicule (1), et des segments de bord, des points caractéristiques et des descripteurs correspondants sont déterminés pour chaque image à partir d'un traitement d'image, et
    **en ce que** dans la phase de reproduction, pour une orientation relative connue ou déterminée, la position et l'orientation relatives dans la position réelle actuelle (26) sont établies par rapport au parcours théorique (10) par triangulation de la position réelle (26) avec deux positions (16), en particulier des positions les plus proches, sur le parcours théorique (10), en particulier en utilisant une orientation dans la position réelle (26) par rapport aux deux positions (16) sur le parcours théorique (10).

**2.** Procédé d'aide à la conduite selon la revendication 1, dans lequel, dans la phase de reproduction, une correspondance des points est établie en ce que

(a) le descripteur établi pour une position réelle (26), en particulier actuelle, est rapproché des descripteurs pour des positions théoriques (16), et
(b) celui des ensembles de données d'une position théorique (16) est déterminé comme ensemble de données de référence pour lequel une concordance de descripteur avec le descripteur de la position réelle (26) est maximale,

en particulier afin de déterminer ainsi au moins approximativement la position actuelle du véhicule (1) par rapport au parcours théorique (10).

**3.** Procédé d'aide à la conduite selon la revendication 2, dans lequel, dans la phase de reproduction, un flux optique $\left(\dot{\vec{r}}\right)$ sous la forme d'un champ vectoriel est établi à partir de l'ensemble de données pour une position réelle (26), en particulier actuelle, et d'un ensemble de données de référence des données de parcours théorique.

**4.** Procédé d'aide à la conduite selon la revendication 3, dans lequel le flux optique $\left(\dot{\vec{r}}\right)$ est décomposé en une composante de translation et une composante de rotation afin de déterminer une orientation actuelle du véhicule (1) ou de sa caméra (2) sur le parcours réel (20).

**5.** Procédé d'aide à la conduite selon l'une quelconque des revendications précédentes, dans lequel, dans la phase de reproduction, une orientation relative est établie sur la base des segments de bord respectifs à partir de l'ensemble de données pour la position réelle (26) et de l'ensemble de données de référence des données de parcours théorique.

**6.** Procédé d'aide à la conduite selon l'une quelconque des revendications précédentes, dans lequel, dans la phase de reproduction, une orientation relative est établie par

(a) la projection de segments de bord issus de l'ensemble de données pour la position réelle (26) et de l'ensemble de données de référence des données de parcours théorique sur une sphère unitaire,
(b) la détermination de points de fuite, et
(c) le rapprochement des points de fuite.

**7.** Système d'aide à la conduite (7) pour un véhicule (1), comprenant des moyens pour exécuter le procédé d'aide à la conduite selon l'une quelconque des revendications 1 à 6.

**8.** Véhicule (1), comprenant

- un dispositif d'entraînement (3), une unité de direction (4), une unité de commande (6) et un système d'aide à la conduite (7) selon la revendication 7,
- l'unité de commande (6) étant réalisée pour commander le dispositif d'entraînement (3) et/ou l'unité de direction (4) sur la base de données fournies par le système d'aide à la conduite (7).

# Fig. 1

# Fig. 2

# Fig. 3

# Fig. 4

# Fig. 5

# Fig. 6

# Fig. 7

# Fig. 8

# Fig. 9

# Fig. 10

## Fig. 11

## Fig. 12

# Fig. 13

# Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015007678 A1

- DE 102015010746 A1